# EUROPÄISCHE PATENTSCHRIFT

(11) **EP 2 813 316 B1**
(45) Veröffentlichungstag und Bekanntmachung des Hinweises auf die Patenterteilung: **04.05.2016**
(21) Anmeldenummer: 14171278.6
(22) Anmeldetag: 05.06.2014
(51) Int. Cl.: B23P 6/00, F01D 5/00, F01D 5/28

(54) **Verfahren zum Verschließen von Kühlluftbohrungen**
Method for closing cooling holes
Procédé de fermeture d'ouvertures pour air de refroidissement

(30) Priorität: 13.06.2013 DE 102013211047
(43) Veröffentlichungstag der Anmeldung: 17.12.2014
(73) Patentinhaber: MTU Aero Engines AG, 80995 München (DE)
(72) Erfinder: Waltemathe, Markus, 30163 Hannover (DE); Wensky, Tobias, 30419 Hannover (DE)

(56) Entgegenhaltungen:
- EP-A1- 1 076 106
- EP-A2- 0 816 635
- WO-A1-03/100108

## Beschreibung

### HINTERGRUND DER ERFINDUNG

### GEBIET DER ERFINDUNG

Die vorliegende Erfindung betrifft ein Verfahren zur Herstellung oder Reparatur von Schaufeln einer Strömungsmaschine und insbesondere ein Verfahren zum Verschließen von Kühlluftbohrungen zu ihrem Schutz bzw. zum Schutz der entsprechenden Kühlluftkanäle während eines Bearbeitungsschritts zur Herstellung der Schaufeln einer Strömungsmaschine.

### STAND DER TECHNIK

Schaufeln von Strömungsmaschinen, wie von stationären Gasturbinen oder Flugzeugtriebwerken, sind zum Teil sehr hohen Temperaturen ausgesetzt, die eine aktive Kühlung der Schaufeln erforderlich machen. Beispielsweise ist in der Hochdruckturbine die Turbineneintrittstemperatur des Verbrennungsgases aus der Brennkammer im Bereich der Schmelztemperatur des Werkstoffes, aus dem die Hochdruckturbinenlaufschaufeln gefertigt werden, sodass die Hochdruckturbinenlaufschaufeln einerseits durch das Aufbringen von keramischen Wärmedämmschichten und andererseits durch das Vorsehen von Kühlluftkanälen zur Ausbildung einer Filmkühlung geschützt werden müssen.

Die gleichzeitige Bereitstellung von Beschichtungen, wie Wärmedämmschichten, einerseits und Kühlluftkanälen andererseits an den Schaufeln der Strömungsmaschine macht die Herstellung derartiger Schaufeln jedoch schwierig und aufwändig, da beispielsweise sicher gestellt werden muss, dass die Kühlluftkanäle zur Abgabe von Kühlluft an den Kühlluftöffnungen des Schaufelblatts auch nach Aufbringen einer Wärmedämmschicht ausreichend durchströmbar sind.

In diesem Zusammenhang ist es bekannt, bei der Herstellung von Wärmedämmschichten bzw. bei der Reparatur von Wärmedämmschichten die Kühlluftkanäle der Schaufeln zu verschließen bzw. zu maskieren, um sicher zu stellen, dass die Kühlluftkanäle durch den Beschichtungsprozess, mit dem die Wärmedämmschichten aufgebracht werden, nicht verschlossen bzw. verstopft werden. Beispiele hierfür sind in der WO 03/100 108 A1, EP 1 076 106 A1 und EP 0 816 635 A2 gegeben.

In der EP 0 816 635 A2 wird beschrieben, dass ein UV - aushärtbarer Kunststoff auf die zu verschließenden Kühlluftöffnungen aufgebracht wird und mittels UV (ultra violett) - Strahlung ausgehärtet wird.

Die WO 03/100 108 A1 beschreibt das Aufbringen eines mit Füllstoffen versehenen Kunststoffes, der beispielsweise auch durch UV - Strahlung ausgehärtet werden kann. Da jedoch nach dem Verschließen der Öffnungen die Wärmedämmschicht beispielsweise durch thermisches Spritzen aufgebracht werden soll, muss das Verschlussmaterial für die Kühlluftbohrungen gegenüber hohen Temperaturen, die beim thermischen Spritzen auftreten, beständig sein. Entsprechend wird das Kunststoffmaterial nach dem Einfüllen in die entsprechenden Kühlluftöffnungen thermisch behandelt, sodass der organische Anteil entfernt wird und das Füllmaterial als temperaturbeständiger Verschluss der Öffnungen verbleibt. Der UV - aushärtbare Kunststoff kann bei diesem Stand der Technik sowohl von der Oberfläche des Schaufelblatts in die Kühlluftöffnungen eingebracht werden, als auch ausgehend von einem in der Schaufel befindlichen Hohlraum.

Die EP 1 076 106 A1 schlägt hierzu weiter vor, eine Strahlungsquelle zur Aushärtung des Kunststoffs im entsprechenden Hohlraum des Schaufelblatts vorzusehen, um das aushärtbare Kunststoffmaterial von außen aufbringen und von innen aushärten zu können.

Unter der Internetadresse www.DELO.de erhält der Fachmann, der auf dem Gebiet des Verscvhließens von Kühlluftbohrungen tätig ist, weiterhin Informationen zum Thema Lichthärtung, Kleben in der Elektronik sowie über neue lichthärtende Klebstoffe.

Während die im Stand der Technik beschriebenen Verfahren für das Verschließen von Kühlluftöffnungen vor dem Aufbringen der Wärmedämmschicht bzw. bei einer noch nicht vorhandenen Wärmedämmschicht oder einer wieder vollständig entfernten Wärmedämmschicht eingesetzt werden können, besteht ein zusätzlicher Bedarf, ein exaktes und definiertes Verschließen von Kühlluftöffnungen auch in der Weise zu ermöglichen, dass Kühlluftbohrungen in einer bereits aufgebrachten Wärmedämmschicht ohne Beeinflussung des Grundwerkstoffs nachbearbeitet werden können.

Obwohl also bereits Verfahren zum Verschließen von Kühlluftöffnungen in Schaufeln von Strömungsmaschinen bekannt sind, besteht somit weiterhin Bedarf an einem einfachen und effizienten Verfahren, welches ein definiertes Verschließen von Kühlluftkanälen und zugleich die Nacharbeitung von Kühlluftkanälen in Wärmedämmschichten ermöglicht.

### OFFENBARUNG DER ERFINDUNG

### AUFGABE DER ERFINDUNG

Es ist deshalb Aufgabe der vorliegenden Erfindung, ein Verfahren zum Verschließen von Kühlluftbohrungen bereitzustellen, welches auf eine einfache und effiziente Weise ein exaktes und definiertes Verschließen von Kühlluftbohrungen ermöglicht, wobei insbesondere eine Nachbearbeitung von Kühlluftkanälen in bereits aufgebrachten Wärmedämmschichten ohne Beeinträchtigung des Grundwerkstoffs möglich sein soll.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche und des Anspruchs 4.

Die vorliegende Erfindung schlägt vor, zum Verschließen von Kühlluftbohrungen ein dual aushärtendes Epoxidharz zu verwenden, sodass durch einen zweistufigen Aushärteprozess (dual aushärtend) ein exaktes und definiertes Verschließen der Kühlluftbohrungen möglich ist.

Bei dem erfindungsgemäßen, dual aushärtenden Epoxidharz erfolgt eine erste Aushärtung durch Strahlungsaushärtung und eine zweite Aushärtung durch thermische Aushärtung oder durch Reaktion mit einem Reaktionspartner, wie beispielweise Feuchtigkeit aus der umgebenden Atmosphäre oder dergleichen.

Insbesondere kann ein dual aushärtendes Epoxidharz in Form eines kationischen Epoxidklebstoffes verwendet werden. Die Auslösung einer kationischen Polymerisation erfolgt üblicherweise durch Lewis - oder Brönsted - Säuren, die durch vorgelagerte chemische, insbesondere photochemische Reaktionen erzeugt werden können. Derartige Photoinitiatoren können durch Diazonium - Verbindungen, Sulfonium - Verbindungen, Iodonium - Verbindungen gebildet werden, die beispielsweise durch ultraviolettes Licht angeregt werden können (siehe hierzu US 3,205,157 A, US 4,173,476 A, US 4,264,703 A und US 4,394,403 A). Darüber hinaus können auch Photoinitiatoren, die im sichtbaren Lichtbereich arbeiten, eingesetzt werden, wie Cyclopentadienyl - Eisen - Aren - Komplexe (siehe EP 0 094 915 A, WO 96/03453 und EP 0 661 324 A). Darüber hinaus sind weitere Systeme bekannt, wie sie beispielsweise in der WO 95/14716, der WO 96/13538 , der US 5,554,676 A, der US 4,828,583 A, der US 4,256,828 A, US 4,231,951 A, EP 0 119 425 B, DE 4,324,322 A und EP 0 897 710 A2 beschrieben sind. Sämtliche kationischen Epoxidharze, die in den genannten Veröffentlichungen beschrieben sind, können bei der vorliegenden Erfindung Verwendung finden und werden hiermit durch Verweis aufgenommen.

Insbesondere kann ein kationischer Epoxid - Klebstoff Verwendung finden, dessen erste Aushärtung durch eine UV - Bestrahlung erfolgen kann.

Durch die Verwendung von dual aushärtenden, kationischen Epoxidharzen ist es möglich, das fließfähige Harz erfindungsgemäß an einem ersten Ende der Kühlluftbohrungen einzufüllen und an einem zweiten Ende der Kühlluftbohrungen mit Licht, beispielsweise UV - Licht zu bestrahlen, sodass das Harz gemäß der ersten Aushärtung aushärtet, wenn es aus den Kühlluftbohrungen an deren zweiten Enden im Bereich des Schaufelblattes austritt. Auf diese Weise ist es erfindungsgemäß möglich, die Kühlluftkanäle im Bereich des Schaufelblattes durch Einfüllen des Harzes in die Kühlluftkanälen einer Schaufel von innen her definiert zu verschließen, da das Epoxidharz beim Austreten aus den Kühlluftöffnungen mit entsprechendem Licht bestrahlt werden kann, so dass es aushärtet. Diese erste, durch Licht induzierte Aushärtung kann definiert im Bereich des Auftreffens des ersten Lichts erfolgen, sodass der Verschluss der Kühlluftkanäle nach innen versetzt erfolgen kann. Dies führt dazu, dass die Kühlluftkanäle in einem äußeren Bereich, z.B. im Bereich der Wärmedämmschicht, bearbeitet werden können, ohne dass innere Bereiche der Kühlluftkanäle beeinträchtigt werden. Beispielsweise kann eine Nachbearbeitung einer bereits aufgebrachten Wärmedämmschicht in der Weise erfolgen, dass die Kühlluftkanäle in der Wärmedämmschicht nachbearbeitet werden, um eine exakte Kühlluftkanalgeometrie einzustellen. Eine derartige Bearbeitung kann beispielsweise mit Laserstrahlen erfolgen, wobei durch die mit dem dual aushärtenden Epoxidharz verschlossenen Kühlluftkanäle davor geschützt sind, dass das Grundmaterial der Schaufel durch eine Wechselwirkung mit dem Laserstrahl beeinträchtigt wird. Da das zur ersten Aushärtung des dual aushärtenden Epoxidharzes verwendete Licht in ähnlicher Weise wie die Laserstrahlen in die Kühlluftbohrungen eintreten kann, kann das Harz zum Verschließen der Kühlluftkanäle definiert in den Bereichen ausgehärtet werden, in welchen der Grundwerkstoff der Schaufel vor der Bearbeitung mit Laserstrahlen geschützt werden soll.

Nach einer ersten Aushärtung mit Licht, d.h. allgemein elektromagnetischer Strahlung und insbesondere mit UV - Licht, also Licht im ultravioletten Wellenlängenspektrum, und Verschließen der Kanäle wird das in die Kühlluftkanäle eingebrachte Epoxidharz mittels einer zweiten Aushärtung, beispielsweise einer thermischen Aushärtung vollständig ausgehärtet, um ein festes und stabiles Verschließen der Kühlluftkanäle und innenliegenden Strukturen in abgeschalteten Bereichen oder Hinterschnitten zu erreichen. Anschließend kann dann optional die Lasermaterialbearbeitung der Wärmedämmschicht erfolgen.

Nach der Bearbeitung der Wärmedämmschicht bzw. allgemein nach Beendigung der Arbeiten, für welche die Kühlluftkanäle zum Schutz derselben verschlossen worden sind, wird das dual aushärtende Epoxidharz erfindungsgemäß durch Erhitzen wieder aus den Kühlluftkanälen entfernt.

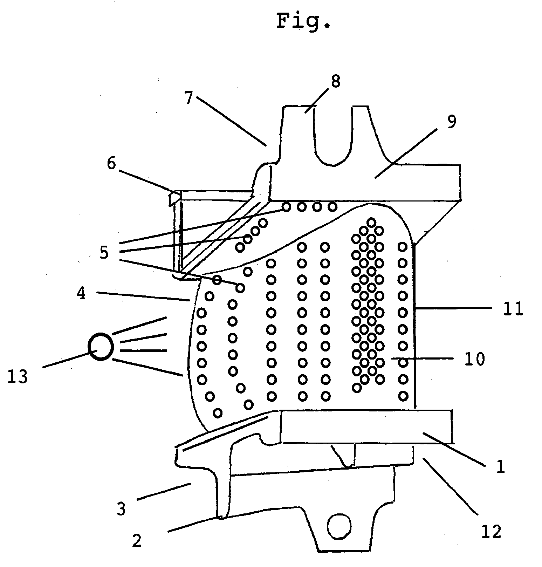

### KURZBESCHREIBUNG DER FIGUR

Die beigefügte Zeichnung zeigt in rein schematischer Weise eine perspektivische Darstellung einer Schaufel eines Flugzeugtriebwerks, welche gemäß der vorliegenden Erfindung hergestellt bearbeitet wird.

### AUSFÜHRUNGSBEISPIEL

Die vorliegende Erfindung wird anhand des nachfolgend beschriebenen Ausführungsbeispiels detailliert beschrieben. Allerdings ist für den Fachmann selbstverständlich, dass die Erfindung nicht auf dieses Ausführungsbeispiel beschränkt ist.

Die beigefügte Figur zeigt eine perspektivische Darstellung einer Schaufel, wie sie beispielsweise in Flugzeugtriebwerken eingesetzt werden kann. Die Schaufel weist ein Schaufelblatt 11 sowie ein inneres Deckband 3 mit einem Fußbereich 12 und ein äußeres Deckband 7 auf. In der Schaufel sind eine Vielzahl von Kühlluftkanälen angeordnet, die sich vom Fußbereich 12 des inneren Deckbands 3 durch das Schaufelblatt 11 zu den Kühlluftöffnungen 5 sowie zu Öffnungen im Bereich des äußeren Deckbands 7 erstrecken.

Die Schaufel weist am inneren Deckband 3 im Fußbereich 12 einen inneren vorderen Fuß 1 und einen inneren hinteren Fuß 2 auf, während im äußeren Deckbandbereich 7 ein vorderer äußerer Fuß 8 und ein hinterer äußerer Fuß 6 vorgesehen sind, sodass das Deckband 7 eine vordere Stirnseite 9 im Bereich der Eintrittskante 10 des Schaufelblatts aufweist. Gegenüberliegend der Eintrittskante 10 liegt eine Austrittskante 4 am Schaufelblatt 11 vor.

Bei der in der Figur gezeigten Schaufel ist das Schaufelblatt 11 mit einer keramischen Wärmedämmschicht versehen, die durch ein Beschichtungsverfahren auf dem Schaufelblatt 11 aufgebracht worden ist. Während der Beschichtung sind jedoch die Kühlluftöffnungen 5 teilweise verschlossen oder verengt worden, sodass sie durch eine entsprechende Nacharbeitung geweitet oder wieder geöffnet werden müssen, um einen ausreichenden Durchfluss von Kühlluft zu ermöglichen. Dies wird durch Laserbohren durchgeführt, wobei jedoch die Laserstrahlen beim Bearbeiten der Kühlluftbohrungen in der aufgebrachten Wärmedämmschicht bis zum Grundmaterial des Schaufelblatts 11 vordringen können, sodass sie mit dem Grundmaterial wechselwirken können. Dies könnte dazu führen, dass das Grundmaterial einer unerwünschten und unzulässigen Wärmebehandlung durch die Laserstrahlen ausgesetzt wird, sodass zur Vermeidung einer entsprechenden Wechselwirkung die Kühlluftöffnungen zumindest im Bereich des Grundmaterials des Schaufelblatts verschlossen werden müssen.

Hierzu wird in die Öffnungen der Kühlluftkanäle im Bereich des äußeren Deckbands 7 flüssiges, dual aushärtendes Epoxidharz eingefüllt, welches durch die Kühlluftkanäle im Inneren des Schaufelblatts 11 bis zu den Kühlluftöffnungen 5 fließt.

Im Bereich der Kühlluftöffnungen 5 am Schaufelblatt 11 sind Strahlungsquellen 13 angeordnet, die die Kühlluftöffnungen 5 im Bereich des Schaufelblatts 11 bestrahlen. Beispielsweise können die Strahlungsquellen 13 UV - Lichtquellen sein, die die Kühlluftöffnungen 5 im Bereich des Schaufelblatts 11 mit UV - Licht bestrahlen.

Erreicht nun der dual aushärtende Epoxid - Klebstoff, der im Bereich des äußeren Deckbands 7 in die Kühlluftkanäle eingefüllt worden ist, die Kühlluftöffnungen 5 im Bereich des Schaufelblatts 11, so wird das dual aushärtende Epoxidharz aufgrund der Bestrahlung ausgehärtet und verschließt dadurch die Kühlluftöffnungen 5, sodass das fließfähige, dual aushärtende Epoxidharz nicht aus den Kühlluftöffnungen 5 im Bereich des Schaufelblatts 11 austreten kann.

Sobald die Kühlluftöffnungen 5 bzw. die Kühlluftkanäle ausreichend in geeigneter Weise mit dual aushärtendem Kunststoff verschlossen und gefüllt sind, wird die Schaufel einer Wärmebehandlung unterzogen, um eine zweite Aushärtung des dual aushärtenden Epoxidharzes durchzuführen. Beispielsweise kann die Schaufel in einem Ofen bei 100°C für 60 Minuten ausgelagert werden, um eine entsprechende Aushärtung des dual aushärtenden Epoxidharzes zu erreichen.

Nachdem das dual aushärtende Epoxidharz durch die zweite Aushärtung endgültig ausgehärtet ist, kann die Nachbearbeitung der Kühlluftöffnungen 5 in der Wärmedämmschicht durch Laserbohren erfolgen, ohne dass der Laserstrahl unerwünschte und unbeabsichtigte Materialveränderungen im Grundmaterial des Schaufelblatts 11 auslösen könnte.

Nach fertiger Nachbearbeitung der Kühlluftöffnungen 5 im Bereich des Schaufelblatts 11 wird der dual aushärtende Epoxid-Klebestoff durch Erwärmung wieder aus den Kühlluftkanälen und den Kühlluftöffnungen entfernt.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden, solange der Schutzbereich der beigefügten Ansprüche nicht verlassen wird.

## Patentansprüche

1. Verfahren zur Herstellung von Schaufeln einer Strömungsmaschine, welche Kühlluftbohrungen aufweist, wobei bei einem Bearbeitungsschritt die Kühlluftbohrungen zu ihrem Schutz zeitweise verschlossen werden,
umfassend die folgenden Schritte
- optionales Aufbringen einer Wärmedämmschicht
- Verschließen der Kühlluftbohrungen unter Verwendung eines dual aushärtenden Epoxidharzes, wobei zumindest in einen Teil der Kühlluftbohrungen an einem ersten Ende der Kühlluftbohrungen das fließfähige Harz eingefüllt wird;
- Durchführung einer ersten Aushärtung durch Strahlungsaushärtung mit UV - Bestrahlung an einem zweiten Ende der Kühlluftbohrungen, so dass das Harz aushärtet und nicht aus den Kühlluftbohrungen an ihrem zweitem Ende austritt;
- Durchführung einer zweiten Aushärtung durch thermische Aushärtung oder durch Reaktion mit einem Reaktionspartner;
- optionales Einbringen von Kanälen in der Wärmedämmschicht mittels Laserbohren;
- Entfernen des dual aushärtenden Epoxidharzes aus den Kühlluftbohrungen durch Erhitzen.

2. Verfahren nach Anspruch 1,
**dadurch gekennzeichnet, dass**
als dual aushärtendes Epoxidharz ein kationischer Epoxid - Klebstoff verwendet wird.

3. Verfahren nach Anspruch 1 oder 2,
**dadurch gekennzeichnet, dass**
das zweite Ende der Kühlluftbohrungen an den Austrittsöffnungen (5) der Kühlluftbohrungen am Schaufelblatt (11) liegt.

4. Verwendung eines dual aushärtenden Epoxidharzes in einem Verfahren gemäß einem der Ansprüche 1 bis 3.

## Claims

1. A method for producing blades of a turbo-machine, which has cooling-air bores, wherein during a processing step the cooling-air bores are temporarily closed for their protection,
comprising the following steps:
- optional application of a heat-insulating layer;
- closure of the cooling-air bores with use of a dual-cure epoxy resin, wherein the free-flowing resin is poured at least into a portion of the cooling-air bores at a first end of the coolingair bores;
- carrying out a first cure by means of radiation curing with UV-irradiation at a second end of the cooling-air bores so that the resin cures and does not exit from the cooling-air bores at their second end;
- carrying out a second cure by means of thermal curing or by means of reaction with a reaction partner;
- optional introduction of channels in the heat-insulating layer by means of laser drilling;
- removal of the dual-cure epoxy resin out of the cooling-air bores by heating.

2. A method according to claim 1,
**characterised in that**
a cationic epoxy adhesive is used as the dual-cure epoxy resin.

3. A method according to claim 1 or 2,
**characterised in that**
the second end of the cooling-air bores lies at the exit openings (5) of the cooling-air bores on the blade vane (11).

4. Use of a dual-cure epoxy resin in a method in accordance with one of claims 1 to 3.

## Revendications

1. Procédé de fabrication d'aubes de turbomachine, qui présente des ouvertures pour air de refroidissement, dans lequel on ferme temporairement les ouvertures pour air de refroidissement pour leur protection pendant une étape d'usinage, comprenant les étapes suivantes:
- on dépose en option une couche thermo-isolante,
- on ferme les ouvertures pour air de refroidissement avec utilisation d'une résine époxyde à double durcissement, dans lequel on verse la résine coulante au moins dans une partie des ouvertures pour air de refroidissement à une première extrémité des ouvertures pour air de refroidissement,
- on effectue un premier durcissement par durcissement au moyen d'un rayonnement avec une exposition aux UV à une deuxième extrémité des ouvertures pour air de refroidissement, de telle manière que la résine durcisse et ne sorte pas des ouvertures pour air de refroidissement par leur deuxième extrémité,
- on effectue un deuxième durcissement par durcissement thermique ou par réaction avec un partenaire de réaction,
- on pratique en option des canaux dans la couche thermo-isolante par perçage au laser,
- on enlève la résine époxyde à double durcissement hors des ouvertures pour air de refroidissement par chauffage.

2. Procédé selon la revendication 1, **caractérisé en ce que** l'on utilise une colle époxyde cationique comme résine époxyde à double durcissement.

3. Procédé selon la revendication 1 ou 2, **caractérisé en ce que** la deuxième extrémité des ouvertures pour air de refroidissement est située aux ouvertures de sortie (5) des ouvertures pour air de refroidissement sur la pale de l'aube (11).

4. Utilisation d'une résine époxyde à double durcissement dans un procédé selon l'une quelconque des revendications 1 à 3.
